# EUROPEAN PATENT APPLICATION

(11) **EP 4 539 222 A2**
(43) Date of publication of application: **16.04.2025**
(21) Application number: 24206329.5
(22) Date of filing: 14.10.2024
(51) Int. Cl.: H01M 50/204, H01M 50/213, H01M 50/249, H01M 50/258, H01M 50/264, H01M 50/284, H01M 50/507, H01M 50/528, H01M 50/517, H01M 50/519

(54) **CELLS CONTACT SYSTEM (CCS) ASSEMBLY, BATTERY MODULE, BATTERY, AND ELECTRICAL DEVICE**

(30) Priority: 13.10.2023 CN 202322759847 U; 13.10.2023 CN 202322759734 U; 26.08.2024 WO PCT/CN2024/114555
(71) Applicant: Eve Energy Co., Ltd., Huizhou, Guangdong 516006 (CN)
(72) Inventor: REN, Chaoju, Huizhou, Guangdong, 516006 (CN); LI, Liangyu, Huizhou, Guangdong, 516006 (CN); ZHANG, Guojiang, Huizhou, Guangdong, 516006 (CN); LU, Jungao, Huizhou, Guangdong, 516006 (CN)
(74) Representative: Murgitroyd & Company

(57) **Abstract**

A CCS assembly (10), a battery module (1), a battery (2) and an electrical device are provided and relate to the technical field of batteries. The CCS assembly includes a first insulation bracket (101), at least one bus bar (102), and an FPC board (103). The first insulating bracket (101) is configured to mount a plurality of cells (20) and is provided with at least a positioning post (1011). The bus bar (102) is configured to be connected to the cells (20). The bus bar (102) is arranged on the first insulating bracket (101) and is provided with a first through hole (1021). The bus bar is sleeved on the positioning post (1011) through the first through hole (1021). The FPC board (103) is connected to the bus bar (102) and is configured to transmit operating signals of the bus bar to a BMS board (30).

## Description

### TECHNICAL FIELD

The present disclosure relates to the technical field of batteries, in particular to a cells contact system (CCS) assembly, a battery module, a battery and an electrical device.

### BACKGROUND

In the related art, operating signals of a battery module are collected by a CCS assembly. The CCS assembly includes a plastic bracket and an output bus bar, a series bus bar and a flexible printed circuit (FPC) board mounted on the plastic bracket. The FPC board is electrically connected to the output bus bar, the series bus bar, and a battery management system (BMS) board. In the related art, a plurality of cells are mounted on the plastic bracket. The bus bar is arranged on one side of the plastic bracket and welded with the poles of the cells.

### SUMMARY

When the bus bar is mounted on the plastic bracket, the positional accuracy of the bus bar is poor, resulting in low alignment accuracy between the bus bar and the poles of the cells. The low alignment accuracy leads to poor welding reliability between the bus bar and the poles of the cells.

Embodiments of the present disclosure provide a CCS assembly, a battery module, a battery and an electrical device, which may improve the positional accuracy of a bus bar. The alignment accuracy of the bus bar and poles of a plurality of cells may be improved. Poor welding reliability between the bus bar and the poles of the cells may be improved.

In a first aspect, the CCS assembly provided by the present disclosure includes a first insulating bracket, at least a bus bar, and an FPC. A first insulating bracket is configured to mount a plurality of cells and is provided with at least a positioning post. The bus bar is configured to be connected to the cells. The bus bar is arranged on the first insulating bracket and is provided with a first through hole. The bus bar is sleeved on the positioning post through the first through hole. The FPC board is connected to the bus bar and is configured to transmit operating signals of the bus bar to the BMS board.

In a second aspect, the battery module provided by the present disclosure includes a second insulating bracket, a plurality of cells, a battery management system (BMS), and the above CCS assembly. The second insulating bracket is disposed opposite to the first insulating bracket. The cells are arranged between the first insulating bracket and the second insulating bracket. The cells are connected to the bus bar. The BMS board is connected to the FPC board.

In a third aspect, the battery provided by the present disclosure includes a box and the above battery module. The box is provided with an accommodation cavity. The battery module is accommodated in the accommodation cavity.

In a fourth aspect, the electrical device provided by the present disclosure includes the above battery, and the battery is configured to supply electrical energy to the electrical device.

In the present disclosure, by providing a positioning post and sleeving the bus bar on the positioning post, the bus bar is positioned according to the positioning post. The positional accuracy of the bus bar mounted on the first insulating bracket is improved, and the alignment accuracy of the bus bar and poles of the cells mounted on the first insulating bracket is improved. Poor welding reliability between the bus bar and the poles of the cells is improved.

### BRIEF DESCRIPTION OF THE DRAWINGS

FIG. 1 is a schematic structural view of a CCS assembly provided by some embodiments of the present disclosure.
FIG. 2 is a top view of a CCS assembly provided by some embodiments of the present disclosure.
FIG. 3 is a cross-sectional view along a line A-A of FIG. 2.
FIG. 4 is an enlarged view at B in FIG. 3.
FIG. 5 is a schematic structural view of a positioning post provided by some embodiments of the present disclosure after being heated.
FIG. 6 is a schematic structural view of a first insulating bracket provided by some embodiments of the present disclosure.
FIG. 7 is an enlarged view at C in FIG. 6.
FIG. 8 is a schematic structural view of the CCS assembly from another perspective provided by some embodiments of the present disclosure.
FIG. 9 is a bottom view of the CCS assembly provided by some embodiments of the present disclosure.
FIG. 10 is a schematic structural view of a battery module provided by some embodiments of the present disclosure.
FIG. 11 is an explosion view of a battery provided by some embodiments of the present disclosure.
FIG. 12 is a schematic structural view of a box provided by some embodiments of the present disclosure.
FIG. 13 is a schematic structural view of a box body provided by some embodiments of the present disclosure.
FIG. 14 is a top view of the box body provided by some embodiments of the present disclosure.
FIG. 15 is a schematic view of cooperation between the box body and the battery module provided by some embodiments of the present disclosure.
FIG. 16 is an enlarged view at D in FIG. 14.
FIG. 17 is an enlarged view at E in FIG. 12.
FIG. 18 is a schematic view of the structure in FIG. 17 after the protective cap is removed.
FIG. 19 is a schematic structural view of a vehicle provided by some embodiments of the present disclosure.

### Reference numerals:

1, battery module;
10, CCS assembly; 20, cell; 30, BMS plate; 40, second insulating bracket;
101, first insulating bracket; 1011, positioning post; 1012, groove; 1013, second through hole; 1014, third through hole; 1015, body groove; 1016, cylinder; 1017, mounting groove; 1018, first flow glue groove; 1019, second flow glue groove;
102, bus bar; 1021, first through hole; 1022, bent part;
103, FPC board; 1031 body part; 1032, foot;
2, battery;
3, vehicle; 31, controller; 32, engine;
4, box;
41, box body; 42, box cap; 421, avoidance groove; 422, low voltage interface; 423, output pole interface; 424, mounting hole; 425, notch; 43, carrying handle; 44, protective cap; 441, articulation shaft; 45, gasket; 46, accommodation cavity;
411, enclosure plate; 4111, guide groove; 4112, positioning plate; 412, end plate; 413, stiffener; 414, output pole fixing base; 4141, threaded hole.

### DETAILED DESCRIPTION

In the related art, the plastic bracket on which the cells are mounted may not position the bus bar, which leads to low accuracy of the installation position of the bus bar, resulting in low alignment accuracy between the bus bar and the poles of the cells. The low alignment accuracy leads to poor welding reliability between the bus bar and the poles of the cells.

Based on the above circumstances, the embodiments of the present disclosure provide a CCS assembly, a battery module, a battery, and an electrical device. The electrical device may be electric toys, electric tools, electromobiles, automobiles, ships, spacecraft, etc. The automobile may be a fuel vehicle, a hybrid vehicle or a pure electric vehicle, etc.

An FPC board in the embodiments of the present disclosure refers to a flexible printed circuit board, also referred to as a flexible or soft circuit board. It is a circuit board made using a flexible substrate that may be bent and folded in three dimensions to accommodate a variety of applications with special shapes and space constraints. The FPC board has the characteristics of small size, light weight and high reliability, and is commonly used in mobile devices, automotive electronics, armamentarium and aerospace.

The BMS board in the embodiments of the present disclosure refers to a battery management system board, also referred to as a battery management board. It is an electronic device used to monitor, control and protect a battery pack. The BMS board may include components such as a battery monitoring unit, a protection unit, and communication interfaces. The main functions of the BMS board include measuring the voltage, current and temperature of the battery, implementing charge and discharge control, monitoring the battery status and identifying faults to ensure the stable operation and safety of the battery. The BMS board is widely used in electric vehicles, energy storage systems, portable devices and other fields that require the use of batteries.

The CCS assembly, the battery module, the battery, and the electrical device provided by the embodiments of the present disclosure will be described in detail below, respectively.

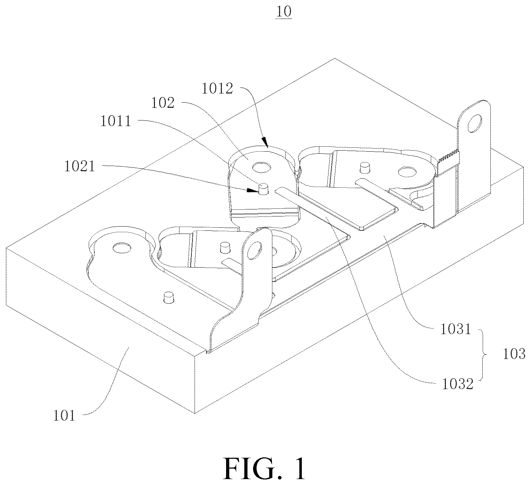

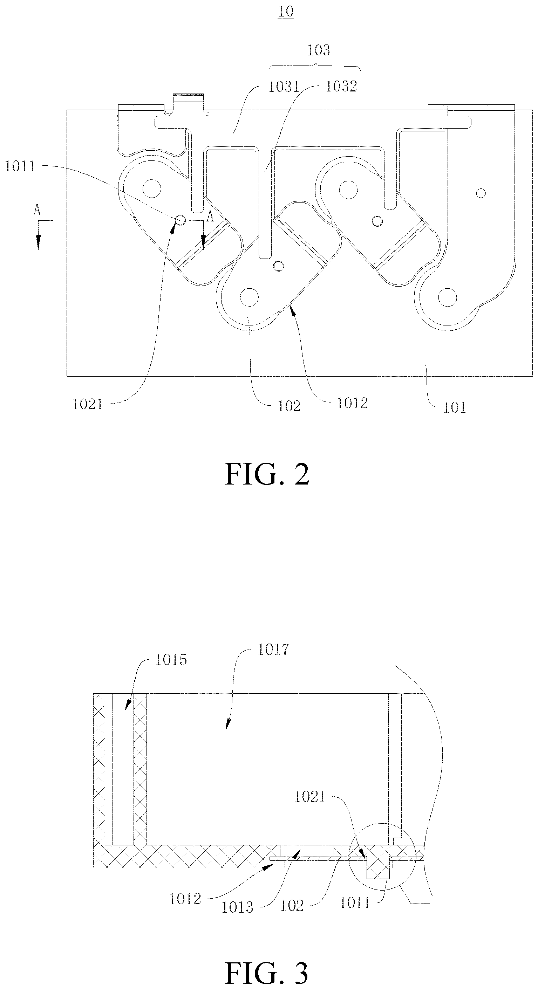

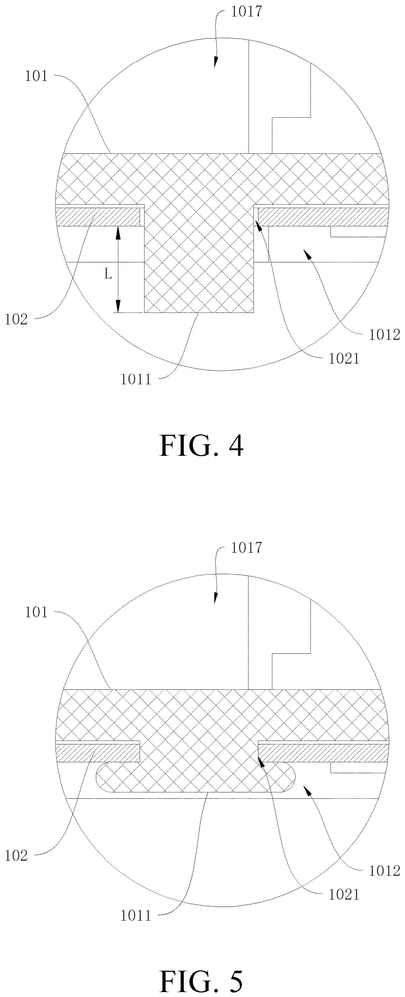

Referring to FIGs. 1 to 4, FIG. 1 is a schematic structural view of the CCS assembly 10 provided by some embodiments of the present disclosure. FIG. 2 is a top view of the CCS provided by some embodiments of the present disclosure. FIG. 3 is a cross-sectional view taken along A-A in FIG. 2. FIG. 4 is an enlarged view at B in FIG. 3. The CCS assembly 10 provided by the embodiments of the present disclosure includes a first insulating bracket 101, a bus bar 102, and an FPC board 103. The first insulating bracket 101 is configured to mount a plurality of cells. The first insulating bracket 101 includes a positioning post 1011. The bus bar 102 is configured to be connected to the cells. The bus bar 102 is provided on the first insulating bracket 101. The bus bar 102 is provided with a first through hole 1021. The bus bar 102 is sleeved on the positioning post 1011 through the first through hole 1021. The FPC board 103 is connected to the bus bar 102 and is configured to transmit operation signals of the bus bar 102 to the BMS board.

For example, the first insulating bracket 101 may be a plastic bracket, which is injection molded. The positioning post 1011 is integrally molded with the first insulating bracket 101. As an insulating member, the first insulating bracket 101 may insulate non-welded regions between the bus bar 102 and the cells, thereby ensuring insulation performance in accordance with electrical safety standards. The FPC board 103 and the bus bar 102 are integrated into one piece, so that the integrated feeding of the FPC board 103 and the bus bar 102 may be realized in the assembly of the CCS assembly 10, thereby facilitating the efficient execution of related production operations.

It can be understood that the bus bar 102 may be a series bus bar, an output bus bar, or both. The series bus bar connects a plurality of cells in series. The output bus bar connects series-connected cell groups in parallel, or connects the series-connected cell group with other loads. The bus bar 102 is a metal bar, and may be, for example, a copper bar, an aluminum bar, or the like. The bus bar 102 is electrically connected to electrodes of the cells, thereby transmitting the electric energy of the cells. The FPC board 103 mainly collects the voltage signal and the temperature signal of the battery module. An input terminal of the FPC board 103 is electrically connected to the bus bar 102, and an output terminal of the FPC board 103 may be directly welded to an acquisition board of the BMS board. The FPC board 103 collects the voltage signal of each cell, and transmits the collected voltage signal to the BMS board.

In the embodiments, by providing the positioning post 1011 and sleeving the bus bar 102 on the positioning post 1011, the bus bar 102 may be positioned according to the positioning post 1011. The positional accuracy of the bus bar 102 mounted on the first insulating bracket 101 may be improved, and the alignment accuracy of the bus bar 102 and poles of the cells mounted on the first insulating bracket 101 is improved. Poor welding reliability between the bus bar 102 and the poles of the cells may be improved.

Further, the cells may be mounted on the first insulating bracket 101 of the CCS assembly 10 supporting the respective electrical connection components. In this way, when assembling the battery module, it is not necessary to separately configure the bracket for carrying the electrical connection components and the bracket for carrying the cell, so that the structure of the battery module 1 using the CCS module 10 may be simpler, and then the related assembly process may be simplified. As a result, not only the production efficiency may be improved, but also the production cost may be reduced, thereby improving the cost performance of related products.

Specifically, the first insulating bracket 101 includes a first surface and a second surface opposite to each other. The first surface is provided with a plurality of mounting grooves 1017 configured to mount the cells. The second surface is provided with the positioning post 1011 located between two adjacent mounting grooves 1017. One end of the groove bottom of the mounting groove 1017 communicates with the second surface through a second through hole 1013, and the second through hole 1013 is provided opposite to one end of the bus bar 102. The other end of the groove bottom of the mounting groove 1017 communicates with the second surface through a third through hole 1014, and the third through hole 1014 is provided opposite to the other end of the bus bar 102. It can be understood that one end of the bus bar 102 is electrically connected to a positive electrode of the cell located in one mounting groove 1017 through the second through hole 1013. The other end of the bus bar 102 is electrically connected to a positive electrode of the cell located in the other mounting groove 1017 through the third through hole 1014.

It can be understood that when a plurality of cells in the battery module are provided, it is necessary to configure a plurality of bus bars 102 as a series bus bar to connect the plurality of cells in series. As shown in FIGs. 1 and 2, there are a plurality of bus bars 102 and a plurality of positioning posts 1011, and the bus bars 102 and the plurality of positioning posts 1011 are provided in one-to-one correspondence.

In addition, in the embodiments, the FPC board 103 and the BMS board are directly connected. The intermediate adapter connector is omitted, which not only improves the reliability of the connection between the FPC board 103 and the BMS board, facilitates signal transmission, but also reduces the material cost.

Referring to FIG. 5, FIG. 5 is a schematic structural view of the positioning post 1011 provided by some embodiments of the present disclosure after being heated. In some embodiments, the positioning post 1011 is a hot-riveted post and is hot-riveted connected to the bus bar 102.

It can be understood that the positioning post 1011 is a plastic piece that will become a viscous fluid by heating and returns to a solid state as the temperature decreases. The hot-riveted connection is that the positioning post is heated by the heat riveting machine to melt and adhere to the bus bar 102, and is connected to the bus bar 102 after curing, so that the bus bar 102 is fixed on the first insulation bracket 101.

In some embodiments, by providing the positioning post 1011 as a hot-riveted post, after the bus bar 102 is sleeved on the positioning post 1011, the positioning post 1011 is heated so that the positioning post 1011 is at least partially melted and bonded to the bus bar 102. The bus bar 102 may be fixed on the first insulating bracket 101. The fixing structure is simple, and the fixing method is convenient. The installation efficiency may be improved, and the manufacturing cost may be reduced.

In addition, the hot-riveted post is used to fix the bus bar 102, so there is no need to fix the bus bar 102 with glue, thereby effectively preventing the glue from overflowing and contaminating the CCS assembly.

Referring to FIGs. 3 and 4, in some embodiments, one end of the positioning post 1011 facing away from the first insulating bracket 101 passes through the bus bar 102.

In the embodiments, by providing one end of the positioning post 1011 passing through the bus bar 102, the convenience of heating and melting the positioning post 1011 may be improved, and the amount of material melted from the positioning post 1011 may be increased. The area of the connection between the positioning post 1011 and the bus bar 102 may be increased, so that the connection stability between the bus bar 102 and the first insulating bracket 101 may be improved.

Referring to FIG. 4, in some embodiments, a length of the end of the positioning post 1011 passing through the bus bar 102 is L, which satisfies 0.5 mm ≤ L ≤ 5 mm.

In the embodiments, with L within the above range, the positioning post 1011 may be heated and melted more conveniently, and an appropriate amount of material melted from the positioning post 1011 may be obtained for connecting the first insulating bracket 101, so as to control the material cost of the positioning post 1011. Specifically, 0.2 mm ≤ L ≤ 4 mm. Exemplarily, L is equal to 2.4 mm.

One end of the positioning post 1011 facing away from the first insulating bracket 101 is heated. After melted, the end of the positioning post 1011 facing away from the first insulating bracket 101 is pressed by an indenter, so that the heated and melted part of the positioning post 1011 collapses toward the bus bar 102. The area of the connection surface between the bus bar 102 and the positioning post 1011 may be increased.

Referring to FIG. 2, in some embodiments, the positioning post 1011 is a cylinder.

It can be understood that the first through hole 1021 in the bus bar 102 that mates with the positioning post 1011 is a circular hole.

In the embodiments, by providing the positioning post 1011 as the cylinder, when the bus bar 102 is installed, the contact area between the bus bar 102 and the positioning post 1011 may be increased, and the positioning accuracy of the bus bar 102 may be improved. In addition, by providing the cylindrical positioning post 1011 mating with the circular hole, the tolerance of the CCS assembly 10 for relative deviation between the positioning post 1011 and the first through hole 1021 may be increased, so that the bus bar 102 may be more smoothly installed on the first insulating bracket 101.

Referring to FIG. 4, in some embodiments, the locating post 1011 is clearance-fitted with the bus bar 102.

Exemplarily, the fitting clearance between the positioning post 1011 and the first through hole 1021 ranges from 0.1 mm to 0.6 mm, for example, 0.4 mm. For example, a diameter of the positioning post 1011 is 3 mm. A diameter of the first through hole 1021 is 3.4 mm.

In the embodiments, the positioning post 1011 is provided in a clearance-fitted structure with the bus bar 102, so that after the positioning post 1011 is heated and melted, the melted part of the positioning post 1011 flows along the surface of the bus bar 102, and the other part flows along the gap between the positioning post 1011 and the bus bar 102. The positioning post 1011 and the bus bar 102 may be connected in the gap, and the area of the connection surface between the positioning post 1011 and the bus bar 102 may be increased.

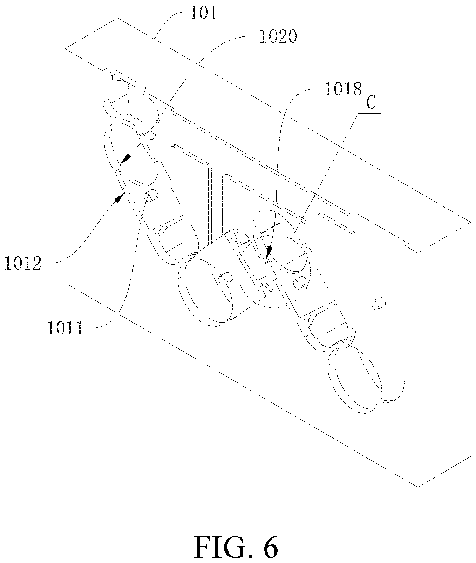

Referring to FIG. 6, FIG. 6 is a schematic structural view of the first insulating bracket provided by some embodiments of the present disclosure. In some embodiments, the first insulating bracket 101 is provided with a groove 1012, and the bus bars 102 is embedded in the groove 1012. As shown in FIG. 1, the positioning post 1011 is provided at the bottom of the groove 1012.

In some embodiments, by embedding the bus bar 102 into the groove 1012, the peripheral edge of the bus bar 102 may be limited by the peripheral edge of the groove 1012, thereby improving the mounting position accuracy of the bus bar 102.

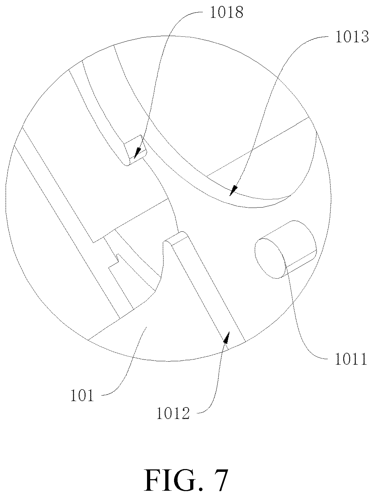

Referring to FIG. 7, FIG. 7 is an enlarged view at C in FIG. 6. A plurality of bus bars 102 and grooves 1012 are provided, and the plurality of bus bars 102 and the plurality of grooves 1012 are arranged in one-to-one correspondence. The first insulating bracket 101 is provided with a first flow glue groove (1018) arranged between adjacent two of the plurality of grooves 1012. The adjacent two of the plurality of grooves (1012) are communicated through the first flow glue groove 1018.

It can be understood that when the battery module is glued to connect the cell and the cell holder into one piece, the glue flows into one groove 1012, and flows through the first flow glue grooves 1018 into another grooves 1012 communication with the first flow glue grooves 108, so that the glue may fill all of the grooves 1012.

In the embodiments, the first glue flow grooves 1018 communication with each other are provided respectively between the two adjacent grooves 1012, so that the flowable path of the glue may be increased in the glue injection operation. The glue injection efficiency may be improved, and the glue filling may be made more uniform.

Referring to FIG. 2, in some embodiments, the bus bar 102 is clearance-fitted with the groove 1012.

In the embodiments, by clearance fitting between the bus bar 102 and the groove 1012, it is possible to effectively avoid processing errors and avoid the bus bar 102 cannot to fit into the groove 1012, thereby improving assembly convenience.

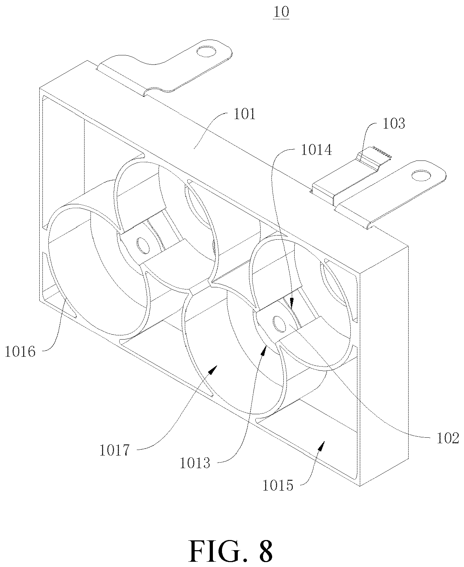

Referring to FIG. 8, FIG. 8 is a schematic structural view of the CCS assembly from another perspective provided by some embodiments of the present disclosure. In some embodiments, the first insulating bracket 101 is provided with a plurality of mounting grooves 1017 configured to mount cells. A plurality of second glue flow grooves 1019 are provided, and each of the plurality of the second glue flow grooves 1019 is provided between two adjacent mounting grooves 1017 on the first insulating bracket 101, and two adjacent mounting grooves 1017 communicate with each other through one second glue flow groove 1019.

It can be understood that the first insulating bracket 101 includes a first surface and a second surface opposite to each other. The first surface is provided with the mounting grooves 1017. The second surface is provided with the grooves 1012. One end of the groove 1012 communicates with one end of the groove bottom of one mounting groove 1017 through the second through hole 1013. The other end of the groove 1012 communicates with one end of the groove bottom of the other mounting groove 1017 through the third through hole 1014. Accordingly, one end of the bus bar 102 located in the groove 1012 may be electrically connected to the positive electrode of one cell through the second through hole 1013. The other end of the bus bar 102 may be electrically connected to the negative electrode of the other cell through the third through hole 1014. Therefore, the plurality of cells may be sequentially connected in series.

Further, in condition that the cell is a cylindrical cell, the mounting groove 1017 may be a cylindrical groove.

In the embodiments, by providing the mounting grooves 1017, the cells are mounted and positioned by the mounting grooves 1017. The layout neatness of the cells may be improved, which facilitates subsequent welding between the cells and the bus bar 102. The assembly efficiency may be improved.

During glue injection, the glue may flow between two adjacent mounting grooves 1017 through the second glue flow groove 1019, so that the flowable path of the glue may be increased during the glue injection operation. The glue injection efficiency may be improved, and the glue filling may be made more uniform.

Referring to FIG. 2, in some embodiments, in condition that the plurality of bus bars 102 are series bus bars, the positive electrode of the cylindrical cell is connected to one bus bar 102, and the negative electrode of the cell is connected to the other bus bar 102. The positive electrode and the negative electrode of the cell are located at the same end of the cell, and the negative electrode is arranged around the positive electrode. Based on this, one end of the bus bar 102 is provided with an outer convex portion having a cylindrical arc-shaped structure, and the other end is provided with an inner concave portion having a cylindrical arc-shaped structure. One end of the bus bar 102 close to the outer convex portion is electrically connected to the positive electrode of the cell, and one end close to the inner concave portion is electrically connected to the negative electrode of the cell. In this way, when the plurality of bus bars 102 are arranged, the outer convex portion of one bus bar 102 faces the inner concave portion of the other bus bar 102 along the series connection direction of the cells. Therefore, the positive and negative electrode arrangement structure of the cells may be adapted to meet the spacing requirements between the two bus bars 102 connected to the same cell, and the contact area between the bus bar 102 and the electrodes of the cells may be larger.

For example, the outer convex portion of one bus bar 102 is concentrically provided with the inner concave portion of the other bus bar 102 along the series connection direction of the cells. The outer convex portion and the inner concave portion of the bus bar 102 are coaxial with the cell connected to the bus bar 102.

Referring to FIGs. 1 and 2, in some embodiments, the FPC board 103 includes a body part 1031 and a plurality of feet 1032 connected to the body part 1031. The body part 1031 is connected to the BMS board. The feet 1032 are connected to the bus bars 102.

Exemplarily, the FPC board 103 is embedded in the first insulating bracket 101.

It can be understood that in condition that a plurality of bus bars 102 are provided, a plurality of feet 1032 are also provided. The feet 1032 are arranged in one-to-one correspondence with the bus bars 102, and the feet 1032 are connected to the bus bars 102, respectively.

In the embodiments, the FPC board 103 is connected to the bus bars 102 through the plurality of feet 1032, so that the portions where the FPC board 103 is connected to the bus bars 102 may have better flexibility. The flatness of the portions where the FPC board 103 is connected to the bus bars 102 may be improved. The stability of contact between the portions where the FPC board 103 is connected to the bus bars 102 and the bus bars 102 may be improved, thereby facilitating signal acquisition.

Referring to FIG. 1, in some embodiments, the bus bar 102 configured to connect cells in series includes a bent portion 1022. One side of the bent portion 1022 is in contact with the positive electrode of the cell, and the other side of the bent portion 1022 is in contact with the negative electrode of the cell. In this way, by providing the bent portion 1022, both ends of the bus bar 102 may be brought into contact with the positive electrode of the cell and the negative electrode having a height lower than the positive electrode, respectively, without increasing the thickness of the bus bar 102. The thickness of the bus bar 102 may be controlled, and the material of the bus bar 102 may be reduced.

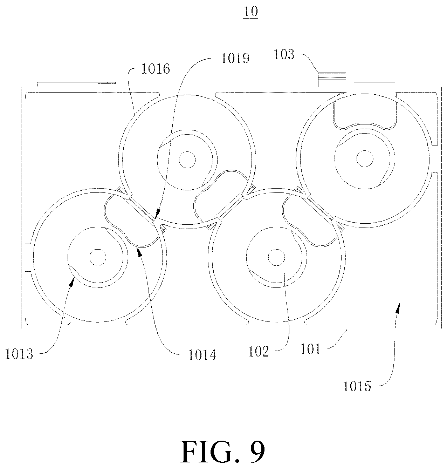

Referring to FIGs. 8 and 9, FIG. 9 is a bottom view of the CCS assembly provided by some embodiments of the present disclosure. In some embodiments, the first insulating bracket 101 includes a first surface and a second surface opposite to each other. The first surface is provided with a plurality of mounting grooves 1017 configured to mount the cells. The second surface is provided with the grooves 1012 configured to mount the bus bars 102, and each of the grooves is located between two adjacent mounting grooves 1017. One end of the groove bottom of the groove 1012 communicates with an adjacent mounting groove 1017 through a second through hole 1013. The other end of the groove bottom of the groove 1012 communicates with the other adjacent mounting groove 1017 through a third through hole 1014.

It can be understood that one end of the bus bar 102 in the groove 1012 is electrically connected to the positive electrode of one cell through the second through hole 1013. The other end of the bus bar is electrically connected to the negative electrode of the other cell through the third through hole 1014.

Exemplarily, the first surface of the first insulating bracket 101 is provided with a main groove. A plurality of cylinders 1016 are provided in the main groove. The circumferential surfaces of two adjacent cylinders 1016 communicate with each other along the series connection direction of the cells. The barrel cavity of the cylinder 1016 forms the mounting groove 1017. A plurality of cylinders 1016 are provided and are divided into two groups. The plurality of cylinders 1016 in each group are arranged at intervals along a first direction, and the cylinders 1016 in the two groups are arranged staggered with each other. A circumferential surface of one of the cylinders 1016 in one group communicates with circumferential surfaces of two cylinders 1016 adjacent thereto in the other group. In this way, the mounting grooves 1017 for mounting the cells may be formed, the material consumption of the first insulating bracket 101 may be reduced, and the material cost may be reduced.

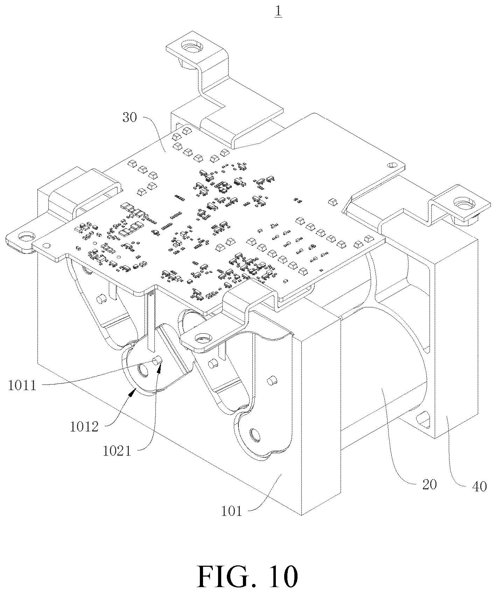

Referring to FIG. 10, FIG. 10 is a schematic structural view of the battery module provided by some embodiments of the present disclosure. The battery module 1 provided by the embodiments of the present disclosure includes a second insulating bracket 40, a cell 20, a BMS board 30, and a CCS assembly 10. The second insulating bracket 40 is disposed opposite to the first insulating bracket 101. The cell 20 is disposed between the first insulating bracket 101 and the second insulating bracket 40. The cell 20 is connected to the bus bars 102. The BMS board 30 is connected to the FPC board 103.

It can be understood that one end of the cell 20 is plugged into the first insulating bracket 101. The other end of the cell 20 is plugged into the second insulating bracket 40. The second insulating bracket 40 is a plastic bracket like the first insulating bracket 101.

It can be understood that a plurality of cells 20 may be provided, and correspondingly, a plurality of bus bars 102 are also provided. Part of the bus bars 102 may be a series bus bar that connects the cells 20 in series into a cell group. The other part of the bus bar 102 may be a positive output bus bar that connects the positive output terminal of the cell group with the positive output bit of the BMS board 30, or may be a negative output bus bar that connects the negative output terminal of the cell group with the negative output bit of the BMS board 30. The BMS board 30A is provided with a positive electrode lead-out terminal connected to the positive electrode output bit and a negative electrode lead-out terminal connected to the negative electrode output bit. The BMS board 30 is connected to other battery modules or electrical device through the positive electrode lead-out terminal and the negative electrode lead-out terminal. Serving as the strength basis of the entire battery module 1, the first insulating bracket 101 and the second insulating bracket 40 are located at both ends of the cells 20 respectively. The cells 20 are fixed between the first insulating bracket 101 and the second insulating bracket 40 to improve the positional stability of the cells 20.

Exemplarily, the output terminal of the FPC board 103 is soldered to the acquisition board of the BMS board 30. Four cells 20 are provided, and the four cells 20 are cylindrical cells. The voltage amplitude of each cylindrical cell is 3 V Correspondingly, the voltage amplitude of the battery module 1 is 12 V Compared with the square cell, there is no need for the cylindrical cell to configure a square end plate for installing the cell 20. The process may be simplified and the material cost may be reduced.

Exemplarily, five cells 20 are provided, and the five cells 20 are cylindrical cells. The voltage amplitude of each cylindrical cell is 5 V Correspondingly, the voltage amplitude of the battery module 1 is 20 V

In the embodiments, by providing the positioning post 1011 and sleeving the bus bar 102 on the positioning post 1011, the bus bar 102 may be positioned according to the positioning post 1011. The positional accuracy of the bus bar 102 mounted on the first insulating bracket 101 may be improved, and the alignment accuracy of the bus bar 102 and poles of the cells mounted on the first insulating bracket 101 is improved. The working stability of the battery module 1 may be improved.

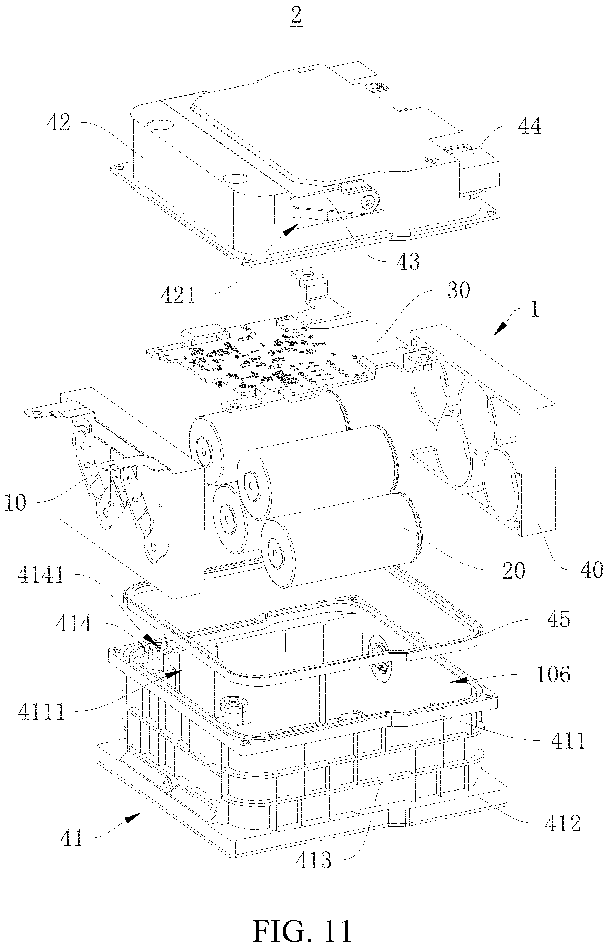

Referring to FIG. 11, FIG. 11 is an explosion view of the battery provided by some embodiments of the present disclosure. The battery provided by the embodiments of the present disclosure includes a box and a battery module 1. The box is provided with an accommodation cavity. The battery module 1 is accommodated in the accommodation cavity.

Exemplarily, the battery may be a cylindrical power battery. The power battery refers to a battery system that provides energy to electric vehicles, hybrid vehicles, and other devices that require large-capacity energy storage. Specifically, the power battery may be a lithium iron phosphate battery, a lithium ion battery, a nickel hydride battery, a sodium ion battery, and the like. The battery is used in pure electric vehicles, fuel vehicles or hybrid vehicles.

In the embodiments, by providing the positioning post 1011 and sleeving the bus bar 102 on the positioning post 1011, the bus bar 102 may be positioned according to the positioning post 1011. The positional accuracy of the bus bar 102 mounted on the first insulating bracket 101 may be improved, and the alignment accuracy of the bus bar 102 and poles of the cells mounted on the first insulating bracket 101 is improved. The working stability of the battery may be improved.

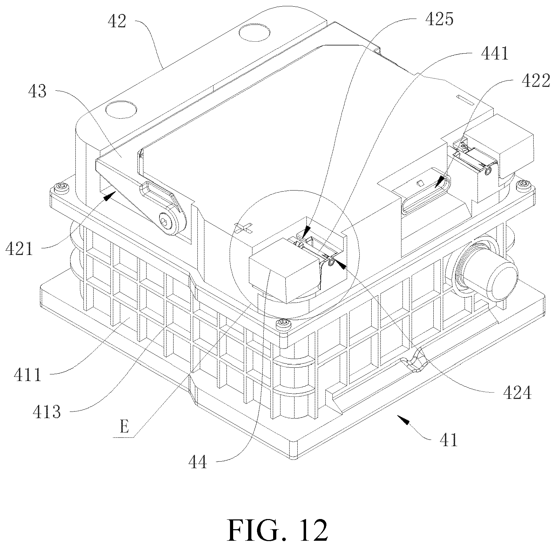

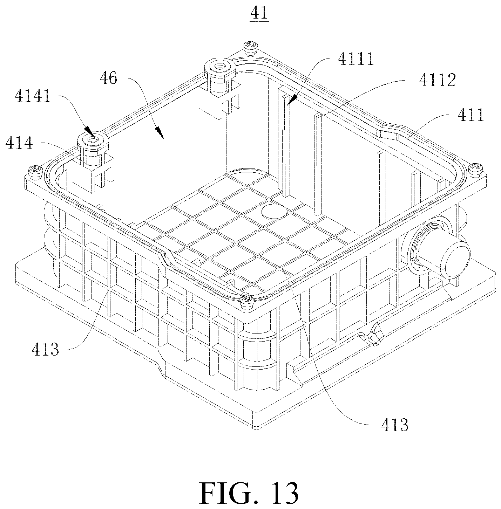

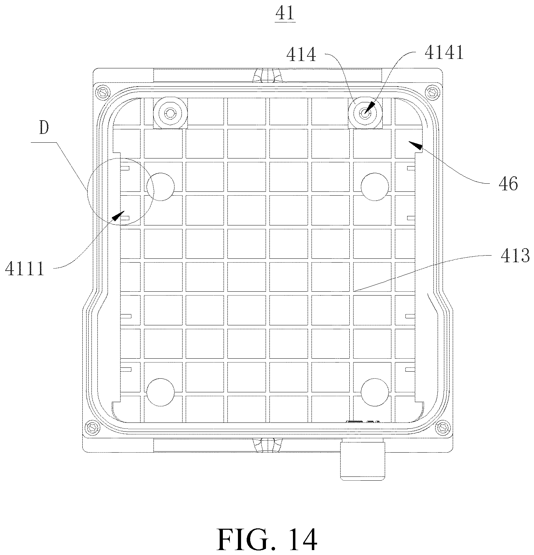

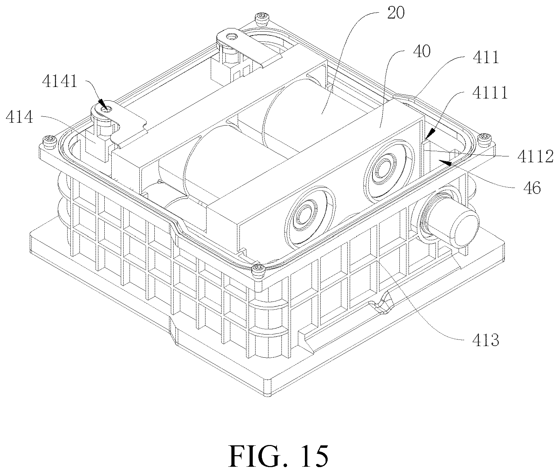

Referring to FIG. 12, FIG. 12 is a schematic structural view of the box 4 provided by some embodiments of the present disclosure. The box 4 includes a box body 41 and a box cap 42. The box body 41 includes an end plate 412 and a plurality of enclosure plates 411. The plurality of enclosure plates 411 are sequentially connected end-to-end to form an annular structure. The end plate 412 is connected to one end of the annular structure to define the accommodation cavity 46 for mounting the battery module 1. A side of at least one of the plurality of enclosure plates 411 facing the accommodation cavity 46 is provided with at least a guide groove 4111 fitting with the second insulating bracket 40 of the battery module 1. As shown in FIGs. 13 and 14, FIG. 13 is a schematic structural view of the box body 41 provided by the embodiments of the present disclosure, and FIG. 14 is a top view of the box body 41 provided by the embodiments of the present disclosure. One groove end of the guide groove 4111 faces the end plate 412, and the other groove end of the guide groove 4111 faces an opening of the accommodation cavity 46. As shown in FIG. 15, FIG. 15 is a schematic view of cooperation between the box body 41 and the battery module 1 provided by some embodiments of the present disclosure. One end of the first insulating bracket 101 is inserted into the guide groove 4111 and connected to a wall surface of the guide groove 4111. The box cap 42 covers a side of the annular structure facing away from the end plate 412, thereby isolating the accommodation cavity 46 from the outside.

One end of the first insulating bracket 101 is inserted into the guide groove 4111 and connected to a wall surface of the guide groove 4111, and/or one end of the second insulating bracket 40 is inserted into the guide groove 4111 and connected to the wall surface of the guide groove 4111.

Specifically, one end of the first insulating bracket 101 may be inserted into the guide groove 4111 and connected to the wall surface of the guide groove 4111. One end of the second insulating bracket 40 may be inserted into the guide groove 4111 and connected to the wall surface of the guide groove 4111. One end of the first insulating bracket 101 may be inserted into the guide groove 4111 and connected to the wall surface of the guide groove 4111, and one end of the second insulating bracket 40 may be inserted into the guide groove 4111 and connected to the wall surface of the guide groove 4111.

Exemplarily, the box 4 is made of an aluminum alloy material. A crisscross shaped reinforcing rib 413 is provided both on the outer wall of the enclosure plate 411 and a side of the end plate 412 close to the accommodation cavity 46, so that the structural strength of the box body 41 may be greatly improved, and the safety of the battery may be improved. The first insulating bracket 101 or the second insulating bracket 40 fitted to the guide groove 4111 may be bonded to the wall surface of the guide groove 4111 by glue, or may be bonded to the guide groove 4111 by hot melt.

Exemplarily, the battery module 1 may include four cylindrical cells 20 connected in series, and the voltage of each cell 20 is 3 V Correspondingly, the voltage of the battery module 1 is 12 V

In the embodiments, by providing the inner wall of the box body 41 with the guide groove 4111, one end of the second insulating bracket 40 of the battery module 1 may be fitted with the guide groove 4111, so that both sides of the battery module 1 may be fixed by the restriction of the groove walls on both sides of the guide groove 4111. The second insulating bracket 40 may be integrally connected to the guide groove 4111 by bonding. The battery module 1 may be fixed in the box 4. Thus, there may be no need to configure bolts to fix the battery module 1, thereby solving the problem of limited internal space in the box that is not conducive to installing the battery module 1 with bolts. Accordingly, the convenience of installing the battery module 1 in the box in the related art may be improved, the battery assembly efficiency may be improved, and the time cost of battery assembly may be reduced.

Referring to FIGs. 13 to 16, FIG. 16 is an enlarged view at D in FIG. 14. In some embodiments, a pair of positioning plates 4112 are provided on a side of the enclosure plate 411 close to the accommodation cavity 46. A gap between the pair of positioning plates 4112 forms the guide groove 4111.

It can be understood that one of the plurality of enclosure plates is provided with one or two pairs of positioning plates 4112, or opposite two of the plurality of enclosure plates are provided with respective one or two pairs of positioning plates 4112.

Exemplarily, the enclosure plates 411 and the positioning plates 4112 are integrally formed structures and are metal parts.

In the embodiments, the guide groove 4111 is defined by providing the positioning plate 4112, so that the overall structure of the box 4 is simple and manufactured conveniently.

In some embodiment, the guide groove 4111 may be defined by the enclosure plate 411. Compared with the previous embodiments, in order to ensure the strength of the position of the enclosure plate 411 where the guide groove 4111 is defined, it is usually necessary to increase the overall thickness of the enclosure plate 411. This not only increases the size of the box 4, but also increases the amount of material used in the box 4. However, in the previous embodiments, the guide groove 4111 is formed by providing the positioning plate 4112, which has no influence on the size of the box 4, and may effectively control the material consumption of the enclosure plate 411, thereby reducing the material cost of the box 4.

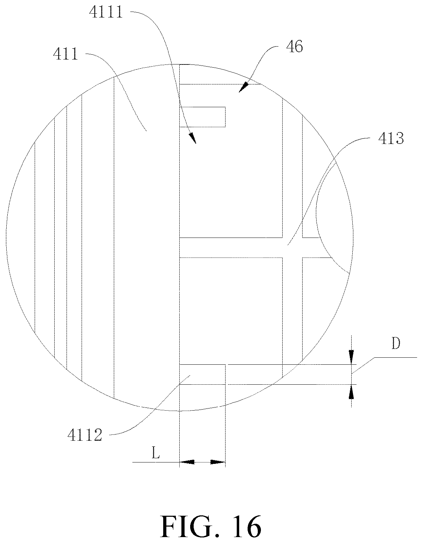

Referring to FIG. 16, in some embodiments, the positioning plate 4112 includes a side surface facing away from the enclosure plate 411 on which the positioning plate 4112 is located. The spacing between the side surface and the enclosure plate 411 on which the positioning plate 4112 is located is L. The minimum distance between the enclosure plate 411 where the positioning plate 4112 is located and the cell 20 is L0. An end portion of the cell 20 is inserted into the second insulating bracket 40, and an end portion of the second insulating bracket 40 is inserted into the guide groove 4111, whereby the positioning plate 4112 is disposed opposite to the cell 20. The minimum distance L0 is the distance between the outer peripheral surface of one of the cells closest to the positioning plate 4112 and the enclosure plate 411 on which the positioning plate 4112 is located. Therefore, that the spacing L is less than or equal to L 0 is defined to avoid interference between the positioning plate 4112 and the cell 20 due to the excessively large size of the positioning plate 4112. If the spacing L is too small, it is not conducive to limiting the position of the battery module 1 by the positioning plate 4112. Therefore, that the spacing L is greater than or equal to 0.5 mm is defined.

Exemplarily, 1 mm ≤ L ≤ 15 mm. The spacing L may be equal to 4 mm or 5 mm.

In the embodiments, by limiting the spacing between the second end and the first end, it is possible to avoid interference between the positioning plate 4112 and the cell 20 and avoid that the positioning plate 4112 is too small to limit the battery module 1.

Referring to FIG. 16, in some embodiments, the thickness of the positioning plate 4112 is D, which satisfies 0.5 mm ≤ D ≤ 3 mm.

It can be understood that the thickness D of the positioning plate 4112 is too small, the strength thereof is insufficient, and the positioning plate 4112 is easily broken. If the thickness D of the positioning plate 4112 is too large, it will lead to unnecessary waste of materials. Therefore, the thickness D of the positioning plate 4112 is limited above, so that the positioning plate 4112 is not easily damaged during assembly and use, and the amount of materials may be controlled to avoid waste of materials.

Exemplarily, 1 mm ≤ D ≤ 2. 5 mm. The thickness D may be 2 mm or 2.4 mm.

Referring to FIG. 14, in some embodiments, the guide grooves 4111 are provided on the two oppositely disposed enclosure plates 411, and the guide grooves 4111 on the two enclosure plates 411 are oppositely disposed. Both ends of the first insulating bracket 101 are inserted into the two guide grooves, respectively, or both ends of the second insulating bracket 40 are inserted into the two guide grooves, respectively.

In the embodiments, by providing the guide grooves 4111 on the two oppositely disposed enclosure plates 411, both ends of the first insulating bracket 101 or the second insulating bracket 40 are limited by the guide grooves 4111, thereby improving the stability of the installation of the battery module 1 and the accuracy of the position.

Referring to FIG. 14, in some embodiments, two guide grooves 4111 are both provided on two oppositely disposed enclosure plates 411, and the guide grooves 4111 on the two enclosure plates 411 are provided oppositely in one-to-one correspondence. Both ends of the first insulating bracket 101 are inserted into two guide grooves, respectively, and both ends of the second insulating bracket 40 are inserted into the other two guide grooves, respectively.

It can be understood that when mounted, both ends of the first insulating bracket 101 are inserted into a pair of opposite guide grooves 4111, and both ends of the second insulating bracket 40 are inserted into the other pair of opposite guide grooves 4111.

In the embodiments, by providing two guide grooves 4111 on each of the opposite enclosures 411, both the first insulating bracket 101 and the second insulating bracket 40 of the battery module 1 are limited by the guide grooves 4111, thereby improving the stability of the installation of the battery module 1 and the accuracy of the position.

As shown in FIG. 15, in some embodiments, one end of one of the plurality of the enclosure plates 411 facing the accommodating cavity 46 and away from the end plate 412 is provided with an output pole fixing base 414, and a side of the output pole fixing base 414 facing away from the end plate 412 is provided with a threaded hole 4141.

It can be understood that the battery module 1 further includes a BMS board 30. One end of the CCS assembly 10 is connected to the cells 20, and the other end of the CCS assembly 10 is connected to the BMS board 30. The BMS board 30 is connected to an external load through a positive lead-out terminal and a negative lead-out terminal. The threaded hole 4141 is engaged with a screw. The screw end of the screw is connected to the threaded hole 4141 after passing through a metal row connected between the CCS assembly 10 and the BMS plate 30, and then the metal row is fixed between the output pole fixing base 414 and the head of the screw.

The BMS board 30 is a battery management system. As a control unit of the battery, the BMS board 30 may realize functions such as voltage acquisition and temperature acquisition for the cell 20, and charge and discharge control and equalization for the battery module 1. The CCS assembly 10 is an acquisition integrated component of the battery module 1, and connects the collected operation information of the cells and the positive and negative output terminals of the cells to the BMS board. After mounted on the second insulating bracket 40, the cells 20 are welded to the CCS module 10. After welding, the battery module 1 is loaded into the box 4. A surface of the metal row in contact with the output pole fixing base 414 and the screw is provided with an insulating structure. The insulating structure may be an insulating layer formed by spraying or dipping plastic, or may be a heat-shrinkable tube, which is sleeved on the metal row to form an insulating structure.

In the embodiments, by providing the output pole fixing base 414, the reliability and safety of the electrical connection of the battery may be improved. The structure is simple, which is beneficial to realizing the function of quick assembly.

In some embodiments, the guide groove 4111 is glued to one of the first insulating bracket 101 and the second insulating bracket 40.

However, when the battery module 1 is mounted into the box 4, it is only necessary to apply the structural adhesive to the portion of one of the first bracket 101 and the second insulating bracket 40 that fits with the guide groove 4111, and/or apply the structural adhesive to the guide groove 4111 after the assembly of the battery module 1 is completed. Then, the battery module 1 is slid into the accommodation cavity 46 along the guide groove 4111, so that one of the first insulating bracket 101 and the second insulating bracket 40 that mates with the guide groove 4111 is cemented with the guide groove 4111 by the structural adhesive. As a result, the installation of the battery module 1 is completed. The installation method is simple and efficient, so that the industrialization process of the battery is greatly simplified, and the production efficiency is greatly improved.

In addition, the matching of the battery module 1 and the guide groove 4111 may improve the positioning accuracy of the battery module 1, thereby improving the assembly accuracy of the battery.

Specifically, the guide groove 4111 is gap-fitted with one of the first insulating bracket 101 and the second insulating bracket 40 to form a gap configured to store glue.

When fixed by glue, optionally, one of the first insulating bracket 101 or the second insulating bracket 40 that fits with the guide groove 4111 is gap-fitted with the guide groove 4111 to form the gap for storing glue. The gap is configured to be filled with glue or hot melt material. Regarding the clearance fit, specifically as follows: the width dimension of the guide groove 4111 is L1, and the dimension of one of the first insulation bracket 101 and the second insulation bracket 40 that fits with the guide groove 4111 along the width direction of the guide groove 4111 is L2, satisfying: L1>L2. The fitting clearance between the second insulating bracket 40 and the guide groove 4111 ranges from 0.2 mm to 1.1 mm. Optionally, the fitting clearance ranges from 0.3 mm to 1 mm, specifically 0.5 mm.

In another embodiments, one of the first insulating brackets 101 and the second insulating brackets 40 that mates with the guide groove 4111 may be fastened to the guide groove 4111 by an interference fit with the guide groove 4111. In the embodiments, in order to smoothly fitting the first insulating bracket 101 or the second insulating bracket 40 with the guide groove 4111, the slot port of the guide groove 4111 facing the opening of the accommodation cavity 46 may be enlarged, or the size of one end of one of the first insulating brackets 101 and the second insulating brackets 40 that mates with the guide groove 4111 facing the bottom wall of the accommodation cavity 46 may be reduced. Both the enlargement and reduction may be achieved by rounding the corners at the corresponding locations. Specifically, one end of the groove wall of the guide groove 4111 facing the opening of the accommodation cavity 46 may be provided with a chamfer, and the chamfer may be a rounded corner or a chamfered corner. One end of the side surface of one of the first insulating brackets 101 and the second insulating brackets 40 that fits with the guide groove 4111 facing the groove wall of the guide groove 4111 and close to the bottom wall of the accommodation cavity 46 may be provided with a chamfer. The chamfer may be a rounded corner or a chamfered corner. By the above arrangement, as the first insulating bracket 101 or the second insulating bracket 40 is inserted into the box, the fit between the first insulating bracket 101 or the second insulating bracket 40 and the box is changed from a clearance fit to a transition fit and then to an interference fit, so that the battery module 1 is fixed in the guide groove 4111 by the squeezing force generated by the interference fit.

As shown in FIG. 12, in some embodiments, the box cap 42 is provided with a handle 43. The handle 43 is rotatably connected to the box cap 42. A side of the box cap 42 facing away from the box body 41 is provided with a avoidance groove 421. The handle 43 is positioned in the leaving groove 421 by rotation. In this way, the convenience of transportation of the battery may be improved by the handle 43, and the battery may be directly fitted into the box cap when the handle 43 is not used, so that excess space is not occupied.

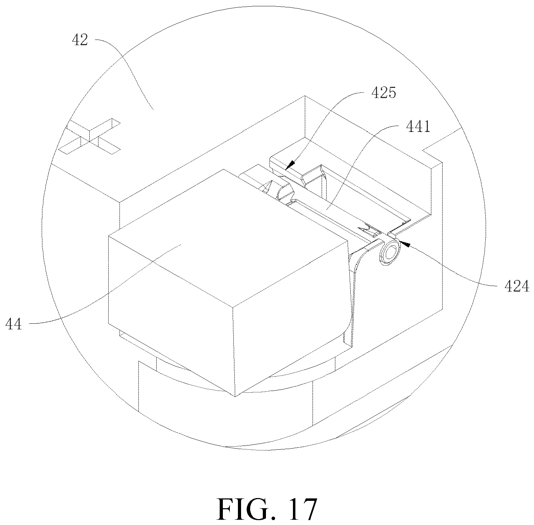

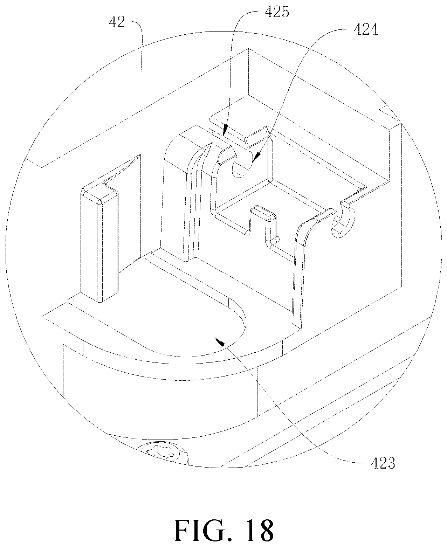

As shown in FIG. 12, in some embodiments, the side of the box cap 42 facing away from the box body 41 is provided with a low voltage interface 422 and an output pole interface 423 respectively communicating with the accommodation cavity 46. As shown in FIGs. 17 and 18, FIG. 17 is an enlarged view at E in FIG. 12, and FIG. 18 is a schematic structural view of FIG. 17 after a protective cover 44 is removed. Two output pole interfaces 423 may be provided, which are a positive output pole interface and a negative output pole interface, respectively. The output pole of the positive lead-out terminal is arranged through the positive output pole interface. The negative lead-out terminal is arranged through the negative output pole interface. The protective cover 44 is provided on the box cap 42 close to the output pole interfaces 423. The protective cover 44 is hinged with the box cap 42. The protective cover 44 is configured to cover or expose the output pole.

The protective cover 44 is configured to protect the output poles, thereby improving the electrical safety of the battery. The output pole connects the battery to the vehicle, which is directly connected to the corresponding interface of the vehicle. The low voltage interface 422 is configured for a wiring harness passing through, and the wiring harness connects the BMS board 30 and the controller of the whole vehicle, so that the communication between the BMS board 30 and the controller may be achieved, thereby facilitating the BMS board 30 to send and receive instructions and the like.

Exemplarily, the box cap 42 is provided with a mounting hole 424, a hole wall of the mounting hole 424 communicates with the outside through a notch 425, and the central angle of the notch 425 is less than 90 °. One side of the protective cover 44 is provided with an articulation shaft 441 whose diameter is larger than the width dimension of the notch 425. The articulation shaft 441 is positioned in the mounting hole 424 and interference fitted with the mounting hole 424.

It can be understood that the mounting hole 424 is circular in cross-section. The protective cover 44 covers or exposes the output poles by rotating about the axis of the mounting hole 424. The articulation shaft 441 may be withdrawn from or externally fitted into the mounting hole 424 by squeezing the notch 425. The articulation shaft 441 is interference fitted with the mounting hole 424, so that the protective cover 44 may stably covers the poles, and the pole may be avoided from being arbitrarily exposed.

Exemplarily, a gasket 45 is provided between the box cap 42 and the box body 41. The gasket 45 is pressed against the box body 41 by the box cap 42 to improve the sealing property of the accommodation cavity 46.

Accordingly, the electrical device provided by the embodiments of the present disclosure includes the battery 2, and the battery 2 provides electrical energy to the electrical device. In the following embodiments, for convenience of explanation, taking the electrical device as a vehicle 3 as an example for description.

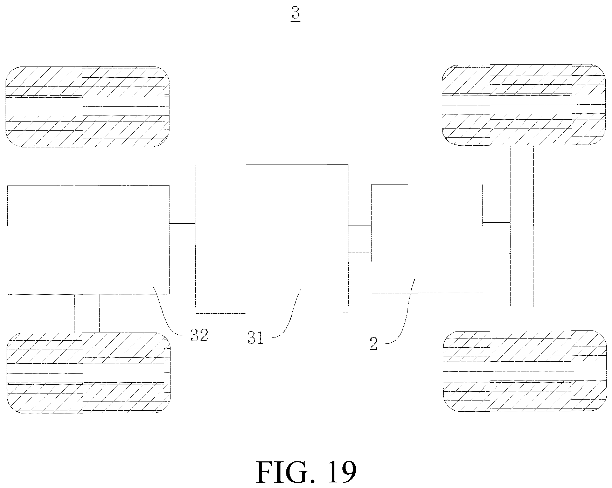

Referring to FIG. 19, FIG. 19 is a schematic structural view of the vehicle 3 provided by some embodiments of the present disclosure. The vehicle 3 may be a fuel vehicle, a gas vehicle, or a new energy vehicle. The new energy vehicle may be a pure electric vehicle, a hybrid vehicle, an extended-range vehicle, or the like. The battery 2 is provided inside the vehicle 3, and the battery 2 may be provided at the bottom, head or rear of the vehicle 3. The battery 2 may supply power to the vehicle 3, for example, the battery 2 may serve as an operating power source for the vehicle 3. The vehicle 3 may further include a controller 31, while the vehicle 3 may further include an engine 32. The battery 2 supplies power to the controller 31 and the engine 32, for example, to meet the operational power requirements of the vehicle 3 during start-up, navigation, and driving.

In some embodiments of the present disclosure, the battery 2 may not only serve as the operating power source of the vehicle 3, but also serve as a driving power source of the vehicle 3 to provide driving power for the vehicle 3 instead of or partially instead of fuel oil or natural gas.

## Claims

1. A cells contact system (CCS) assembly (10), **characterized by** comprising:
a first insulating bracket (101) configured to mount a plurality of cells (20) and provided with at least one positioning post (1011);
at least one bus bar (102) configured to be connected to the cells (20) and arranged on the first insulating bracket (101), wherein the bus bar (102) is provided with a first through hole (1021), and the bus bar (102) is sleeved on the positioning post (1011) through the first through hole (1021); and
a flexible printed circuit (FPC) board (103) connected to the bus bar (102) and configured to transmit operating signals of the bus bar (102) to a battery management system (BMS) board (30).

2. The CCS assembly (10) of claim 1, **characterized in that** the positioning post (1011) is a hot riveting post and is connected to the bus bar (102) by hot riveting.

3. The CCS assembly (10) of claim 2, **characterized in that** one end of the positioning post (1011) passes out of the bus bar (102).

4. The CCS assembly (10) of claim 3, **characterized in that** a length of one end of the positioning post (1011) facing away from the first insulating bracket (101) and passing through the bus bar (102) is L, and L is greater than or equal to 0.5 mm and less than or equal to 5 mm.

5. The CCS assembly (10) of any one of claims 1 to 4, **characterized in that** the first insulating bracket (101) is provided with at least one groove (1012), the bus bar (102) is embedded in the groove (1012), and the positioning post (1011) is arranged at a bottom of the groove (1012).

6. The CCS assembly (10) of claim 5, **characterized in that** the CCS assembly (10) comprises a plurality of bus bars (102) and a plurality of grooves (1012), the plurality of bus bars (102) and the plurality of grooves (1012) are arranged in one-to-one correspondence, the first insulating bracket (101) is provided with a plurality of first flow glue grooves (1018), each of the first flow glue grooves (1018) is arranged between adjacent two of the plurality of grooves (1012), and the adjacent two of the plurality of grooves (1012) are communicated through a corresponding one of the first flow glue grooves (1018).

7. The CCS assembly (10) of claim 5 or 6, **characterized in that** the bus bar (102) is clearance-fitted with the groove (1012).

8. The CCS assembly (10) of any one of claims 1 to 7, **characterized in that** the first insulating bracket (101) is provided with a plurality of mounting grooves (1017) configured to mount the cells (20), the first insulating bracket (101) is provided with a plurality of second glue flow grooves (1019), each of the second glue flow grooves (1019) is arranged between adjacent two of the plurality of mounting grooves (1017), and the adjacent two of the plurality of mounting grooves (1017) are communicate through a corresponding one of the second glue flow groove (1019).

9. The CCS assembly (10) of any one of claims 1 to 8, **characterized in that** the FPC board (103) comprises a body part (1031) and at least one foot (1032) connected to the body part (1031), the body part (1031) is connected to the BMS board (30), and the foot (1032) is connected to the bus bar (102).

10. A battery module (1), **characterized by** comprising:
the cells contact system (CCS) assembly (10) of any one of claims 1 to 9;
a second insulating bracket (40) disposed opposite to the first insulating bracket (101);
a plurality of cells (20) disposed between the first insulating bracket (101) and the second insulating bracket (40) and connected to the bus bar (102); and
a battery management system (BMS) board (30) connected to the FPC board (103).

11. A battery (2), **characterized by** comprising:
a box (4) provided with an accommodation cavity (46); and
the battery module (1) of claim 10 accommodated in the accommodation cavity (46).

12. The battery (2) of claim 11, **characterized in that** the box (4) comprises a box body (41) and a box cap (42), the box body (41) comprises an end plate (412) and a plurality of enclosure plates (411), the plurality of enclosure plates (411) are sequentially connected end-to-end into an annular structure, the end plate (412) is connected to one end of the annular structure to define the accommodation cavity (46), a side of at least one of the plurality of enclosure plates (411) facing the accommodation cavity (46) is provided with at least one guide groove (4111), one groove end of the guide groove (4111) faces the end plate (412), another groove end of the guide groove (4111) faces an opening of the accommodation cavity (46), and the box cap (42) is configured to cover a side of the annular structure facing away from the end plate (412); and
one end of the first insulating bracket (101) is inserted into the guide groove (4111) and connected to a wall surface of the guide groove (4111), and/or one end of the second insulating bracket (40) is inserted into the guide groove (4111) and connected to the wall surface of the guide groove (4111).

13. The battery (2) of claim 12, **characterized in that** a side of at least one of the plurality of enclosure plates (411) close to the accommodation cavity (46) is provided with at least a pair of positioning plates (4112), and a gap between the pair of positioning plates (4112) forms the guide groove (4111).

14. The battery (2) of claim 13, **characterized in that** one of the pair of positioning plates (4112) comprises a side surface facing away from one of the plurality of enclosure plates (411) where the one of the pair of positioning plates (4112) is located, a spacing between the side surface and the one of the plurality of enclosure plates (411) is L, a minimum distance between the one of the plurality of enclosure plates (411) and the plurality of cells (20) is L0, and L is greater than or equal to 0.55 mm and less than or equal to L0; and/or,
one of the pair of positioning plates (4112) has a thickness D, and D is greater than or equal to 0.5 mm and less than or equal to 3 mm.

15. The battery (2) of any one of claims 12 to 14, **characterized in that** opposite two of the plurality of enclosure plates (411) are provided with respective one guide groove (4111), and two guide grooves (4111) respectively on the opposite two of the plurality of enclosure plates (411) are oppositely disposed; and both ends of the first insulating bracket (101) are inserted into the two guide grooves (4111), respectively, or both ends of the second insulating bracket (40) are inserted into the two guide grooves (4111), respectively; or
opposite two of the plurality of enclosure plates (411) are provided with respective two guide grooves (4111), and the guide grooves (4111) respectively on the opposite two of the plurality of enclosure plates (411) are oppositely disposed in one-to-one correspondence, both ends of the first insulating bracket (101) are inserted into two of the guide grooves (4111), respectively, and both ends of the second insulating bracket (40) are inserted into another two of the guide grooves (4111), respectively.

16. The battery (2) of any one of claims 12 to 15, **characterized in that** a side of one of the plurality of enclosure plates (411) facing the accommodation cavity (46) and away from the end plate (412) is provided with an output pole fixing base (414), and a side of the output pole fixing base (414) facing away from the end plate (412) is provided with a threaded hole (4141); or
the guide groove (4111) is glued to or interference-fitted with one of the first insulating bracket (101) and the second insulating bracket (40).

17. An electrical device, **characterized in that** the electrical device comprises the battery (2) of any one of claims 11 to 16, and the battery (2) is configured to supply electrical energy to the electrical device.
